Europäisches Patentamt

European Patent Office

Office européen des brevets

(11) Veröffentlichungsnummer: **0 387 235**
**A1**

## (12) EUROPÄISCHE PATENTANMELDUNG

(21) Anmeldenummer: **90890006.1**

(22) Anmeldetag: **09.01.90**

(51) Int. Cl.5: **C10M 175/00**

(30) Priorität: **24.01.89 AT 127/89**

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **Berger, Ferdinand**
**Traunfallgasse 6**
**A-4690 Schwanenstadt(AT)**

(72) Erfinder: **Berger, Ferdinand**
**Traunfallgasse 6**
**A-4690 Schwanenstadt(AT)**

(74) Vertreter: **Atzwanger, Richard, Dipl.-Ing.**
**Mariahilfer Strasse 1c**
**A-1060 Wien(AT)**

(54) **Verfahren zur Aufbereitung von Fahrzeug-Altölen und Vorrichtung zur Durchführung dieses Verfahrens.**

(57) Verfahren und Vorrichtung zur Aufbereitung von Fahrzeug-Altölen, insbesondere von verunreinigten Motor-ölen, Getriebeölen und Lagerölen, durch physikalisch-chemische Behandlung. Dabei wird das Altöl nach einer Grobabscheidung von festen Verunreinigungen und Wasser in einem Koaleszenzabscheider in eine Ölphase und eine Schlammphase getrennt. Die Ölphase wird durch aufeinanderfolgende Chemisorptions- und Adsorptionsfiltration zur Heizölqualität gereinigt und die wässerige sowie die Schlammphase werden mit einem hydrophoben Aktivgranulat in Kontakt gebracht, an welchem sich Öl und Säureharz binden.

EP 0 387 235 A1

EP 0 387 235 A1

**Verfahren zur Aufbereitung von Fahrzeug-Altölen und Vorrichtung zur Durchführung dieses Verfahrens**

Die gegenständliche Erfindung betrifft ein Verfahren zur Aufbereitung von Fahrzeug-Altölen, insbesondere von Motorölen, Getriebeölen und Lagerölen, zu Heizöl durch physikalisch-chemische Behandlung. Die Erfindung betrifft weiters eine Vorrichtung zur Durchführung dieses Verfahrens.

Gebrauchte Fahrzeugöle enthalten neben den paraffinbasischen Grundölen auch Reste von Treibstoffen und Reste der ursprünglich zugesetzten Additiva, weiters Säureanteile, Metallabriebe, andere Verschmutzungen, Oxidations- und Krackprodukte durch die mechanische Beanspruchung sowie die Hochtemperatur-Beanspruchung während des Gebrauches u.dgl. mehr. Additiva werden zugesetzt, um den Fahrzeugölen die erforderliche Widerstandsfestigkeit gegenüber den Anforderungen während des Gebrauches zu verleihen. Zudem dienen sie zur Selbstreinigung der Motoren. Es handelt sich dabei meist um organische oder metallorganische Verbindungen, weiters um Detergentien, Dispersants sowie - insbesondere bei den Getriebeölen - um Chlor-Schwefel-Verbindungen.

Gebrauchte Fahrzeugöle, welche in Tankstellen und Werkstätten anfallen, stellen bei ihrer Beseitigung deshalb ein Problem dar, da in ihnen in großem Ausmaß Schadstoffe enthalten sind, welche es nicht gestatten, sie ohne Vorbehandlung zu verbrennen. Da jedoch Altölen ein hoher Heizwert zukommt, wird angestrebt, sie für die Energieversorgung derjenigen Anlagen, in denen sie anfallen, verwenden zu können. Hierbei müssen die einschlägigen gesetzlichen Bestimmungen beachtet werden. Durch die zahlreichen Additiva, welche den verschiedenen Fahrzeugölen zugesetzt werden, sowie durch die in diesen enthaltenen Metallabriebe liegen jedoch die Emissionswerte beim Verbrennen von ungereinigten Altölen weit über den zulässigen Grenzen.

Die einfachste Aufarbeitung von Altölen besteht in der mechanischen Entfernung der Grobanteile und der Abtrennung von Wasser. Dadurch werden aber aus dem Altöl nur die ungelösten Verunreinigungen entfernt, wogegen die löslichen Anteile an Schadstoffen, wie die Schwermetallverbindungen und die Chlor- und Schwefelverbindungen, in diesem verbleiben.

Es sind Verfahren bekannt, mit deren Hilfe gebrauchte Mineralöle, insbesondere Motoraltöle, in Großanlagen unter Verwendung aufwendiger Methoden zu sogenannten Regeneratölen verarbeitet werden. Zu diesem Zweck werden die Altöle filtriert, destilliert und raffiniert, wodurch Öle erhalten werden, deren Qualität zwar einem Neuöl entspricht, deren Herstellungskosten jedoch weit über denjenigen von Neuöl liegen, weswegen die Wirtschaftlichkeit dieser Verfahren nur von der Entsorgung her gesehen werden kann. Dennoch werden in derartigen Anlagen etwa 40 000 bis 150 000 t/Jahr verarbeitet.

Zudem werden Motoraltöle auch durch Verheizen entsorgt, wobei jedoch deshalb aufwendige Rauchgasreinigungsanlagen vorgesehen sein müssen, da die bei der Verbrennung dieser Altöle auftretenden Emissionswerte über den zulässigen Grenzen liegen.

Der gegenständlichen Erfindung liegt demnach die Aufgabe zugrunde, ein Verfahren und eine Vorrichtung zu schaffen, mit deren Hilfe Fahrzeug-Altöle dadurch entsorgt werden können, daß sie zur Energieversorgung an Ort und Stelle in Werkstätten, Tankstellen und dgl. verwendet werden. Dies wird erfindungsgemäß dadurch erzielt, daß das Altöl vorzugsweise nach Abscheidung der festen Grobanteile und einer sich durch Schwerkraft absetzenden wässerigen Phase durch einen Koaleszenzabscheider geleitet wird, in welchem die Trennung in eine aufsteigende Ölphase und eine absinkende wässerig-ölige Schlammphase erfolgt, worauf die Ölphase durch aufeinanderfolgende Chemisorptions- und Adsorptionsfiltration bis zur Heizölqualität gereinigt und die Schlammphase, vorzugsweise gemeinsam mit der anfangs abgeschiedenen wässerigen Phase, mit einem hydrophoben mineralischen Aktivgranulat in Kontakt gebracht wird, an dem sich die Ölreste und Säureharzanteile binden, die als Feststoffe ausgetragen werden.

Durch dieses Verfahren wird ein Öl erhalten, das in bekannten Heizkesseln mit einer Leistung von 50 kW bis 700 kW verfeuert werden kann, ohne daß eine Rauchgasreinigung erforderlich ist. Als Nebenprodukt des Verfahrens werden nur leicht handhabbare, mit Ölresten und Säureharz beladene Granulate und Filterrückstände aus der Chemisorptions- und Adsorptionsfiltration erhalten, welche als Sondermüll entsorgt werden müssen.

Nach der Entfernung der Verunreinigungen mittels des Koaleszenzabscheiders, wodurch etwa 75 % der im Altöl enthaltenen Verunreinigungen entfernt werden, wird das verbleibende Öl einer Chemisorption über alkalisch und sauer aktiviertem Tongranulat zugeführt. Die Behandlung mit dem alkalisch aktivierten Granulat erfolgt zuerst, da das aus dem Koaleszenzabscheider kommende Öl noch saure Bestandteile enthält, auch wenn die Hauptmasse an Säureharzen und sauren wässerigen Anteilen in die Schlammphase abgeht. Die alkalische Aktivierung des Tonmaterials erfolgt durch Erhitzen mit Natronlauge oder Soda. Neben den sauren Bestandteilen werden in dieser Filterschicht auch Teile der Schwermetallverbindungen gebunden, welche im Altöl gelöst enthalten sind.

2

Der größere Teil der Schwermetallverbindungen wird in der darauffolgenden zweiten Filterschicht gebunden, deren Material aus sauer aktiviertem Tongranulat besteht. Insbesondere wird hierdurch Cadmium zurückgehalten, das sonst als äußerst schädlicher Bestandteil in die Rauchgase gelangen würde.

Die für diese beiden Filterschichten verwendten Aktivgranulate bestehen aus Tonmineralien mit ausgeprägter Kristallgitterstruktur und feinporiger, großer innerer Oberfläche, wodurch zusätzlich zur Chemisorption durch alkalische und saure Komponenten auch eine Adsorption von Schadstoffen und Verunreinigungen erfolgt.

Die dritte Filterschichte stellt eine neutrale Adsorptionsmasse aus Aktivkohle dar, in der Chlor- und Schwefelverbindungen gebunden werden. Als besonders günstig hat sich hierbei eine Steinkohlen-Aktivkohle erwiesen, welche insbesondere jene Verbindungen adsorbiert, die aufgrund des pH-Wertes des Altöles und der Molekülgröße in den vorhergehenden Filterschichten nicht zurückgehalten wurden.

Die maximale Beladung der Filter kann an der Änderung der Rauchgasemissionswerte festgestellt werden. Zu diesem Zweck werden die Chlor- und Schwefeldioxidgehalte der Abgase bestimmt. Hierfür sind in der Abgasleitung des Heizkessels Meßstellen vorgesehen, welche mit einer Steuereinrichtung für die gesamte Vorrichtung gekoppelt sind, durch welche bei Durchbruch der Filter die Vorrichtung abgeschaltet wird. Üblicherweise wird nicht ein Durchbruch abgewartet, sondern werden die Filter nach empirisch festgelegten Einsatzzeiten regelmäßig gewechselt.

Die aus dem Koaleszenzabscheider stammende Schlammphase wird vorzugsweise mit der aus der ersten Grobabscheidung stammenden wässerigen Phase vereinigt und anschließend mit einem auf einer Wasseroberfläche schwimmenden Aktivgranulat in Kontakt gebracht. Dieses Granulat besteht aus einem thermisch und mechanisch aktivierten Tonmaterial in Art eines Blähtons, das mit Gasblasen beladen ist, wodurch es schwimmfähig ist. Durch die hydrophobe Oberfläche dieses Granulats wird dasselbe vom Wasser nicht benetzt. Beim Kontakt mit dem ölig-wässerigen Material wird es jedoch mit den Öl- und Säureharzanteilen beladen, wobei die Gasblasen verdrängt werden, wodurch das Granulat nach seiner Sättigung unter die Wasseroberfläche absinkt. Am Boden dieser Trennanlage kann das gesättigte Granulat gesammelt und ausgetragen werden.

Die Gasbeladung des Aktivgranulats erfolgt bei Temperaturen von etwa 1.000 $^\circ$C bis 1.500 $^\circ$C und daran anschließende rasche Abkühlung. Die Korngröße des Granulats beträgt etwa 0,5 mm bis 2,0 mm Durchmesser.

Vorteilhafterweise wird die wässerig-schlammige Phase von unten in eine auf dem Wasser schwimmende Schicht aus Aktivgranulat eingeleitet, worauf sie sich in diesem verteilt und hierauf mit dem Granulat absinkt. Das dabei aus der wässerigen-schlammigen Phase abgeschiedene Wasser vermischt sich mit dem in der Trennanlage befindlichen Wasser und wird über einen Überlauf abgeleitet. Dieses Wasser ist so rein, daß es in die öffentliche Kanalanlage abgelassen werden kann. Sein Restkohlenwasserstoffgehalt beträgt maximal 5 ppm.

Basierend auf diesem Verfahren wurde eine Vorrichtung geschaffen, welche eine Kompaktanlage für Tankstellen, Werkstätten und dgl. bildet, in der nicht nur das anfallende Altöl entsorgt, sondern auch Wärmeenergie für den Betrieb gewonnen wird. Die erfindungsgemäße Vorrichtung enthält:
- einen Grobabscheider mit einem Sieb, einer Ölabziehvorrichtung und einem Wasserabzugsventil,
- einen Behälter mit einem Koaleszenzabscheider und mit darüber angeordneten, übereinander liegenden Filterschichten aus alkalisch und sauer aktiviertem Tongranulat und Aktivkohle, einer Ölabzugsleitung und einem Schlammabzugsventil,
- einen Heizkessel mit einem Brenner und einer Abgasableitung und
- eine Trennanlage bestehend aus einem Wasserbehälter mit einem an der Bodenseite angeordneten Ablauf, einem Zuführtrichter für das gasbeladene Aktivgranulat, einer Zuleitung für das zu reinigende wässerig-schlammige Material und einem Wasserüberlauf zur Ableitung des Wassers.

Im Grobabscheider werden mit Hilfe des Siebes im Altöl enthaltene feste Verunreinigungen, wie Metallteile und dgl., abgetrennt. Eine wesentliche Wassermenge setzt sich im Behälter durch Schwerkraft ab und wird nach unten ausgetragen. Die aufsteigende Ölphase wird, vorzugsweise nach einer Feinfiltration und Aufheizung auf 70 $^\circ$C in den Behälter mit dem Koaleszenzabscheider geleitet. Dieser ist mit Glasfasermatten ausgebildet, an welchen eine Trennung des Altöles in eine aufsteigende Ölphase und eine wässerig-ölige Schlammphase erfolgt. Hierauffolgend wird die Ölphase filtriert.

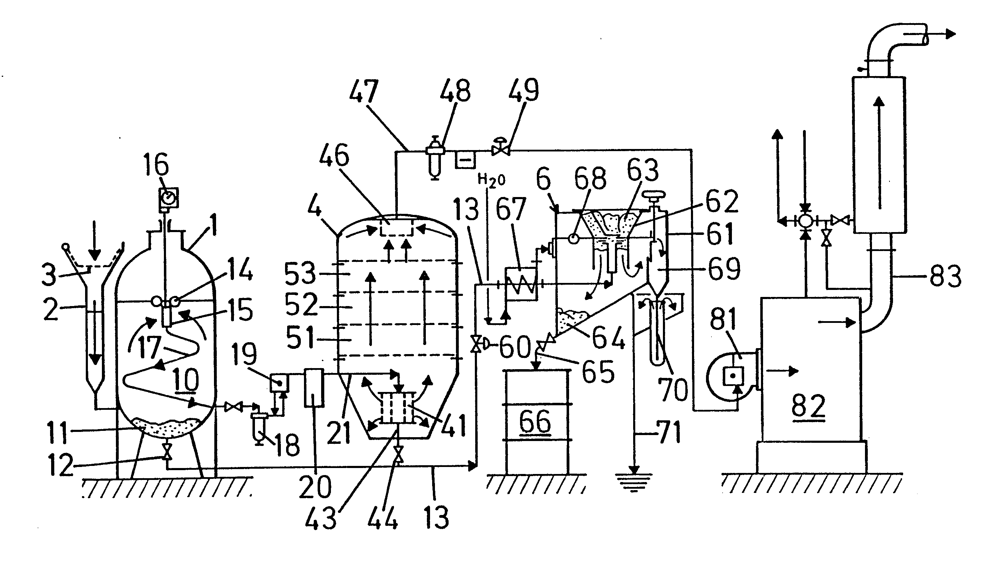

Das erfindungsgemäße Verfahren und eine erfindungsgemäße Vorrichtung zu dessen Durchführung sind nachstehend anhand eines in der Zeichnung dargestellten Ausführungsbeispieles näher erläutert:

Eine anmeldungsgemäße Vorrichtung enthält einen Behälter 1, in welchen über einen Einfülltrichter 2 das zu entsorgende Altöl eingebracht wird. Das Altöl enthält Wasser, Säureanteile, Metallabriebe, Schlamm und gegebenenfalls Grobanteile. Die in dieser Mischung enthaltenen Grobanteile werden durch ein im Einfülltrichter 2 angeordnetes Sieb 3 entfernt. Im Behälter 1 erfolgt eine erste Trennung dieses Gemisches 10, indem sich der Schlamm, Wasser und andere schwere Bestandteile am Boden des Behälters 1 sammeln, wogegen die leichten Bestandteile, insbesondere Öl, zur Oberfläche des Gemisches 10 aufsteigen.

Die sich am Boden des Behälters 1 sammelnden schweren, insbesondere wässerigen Bestandteile 11 werden über ein Ventil 12, welches periodisch geöffnet wird, abgezogen und über eine Leitung 13 abgeführt. An der Oberfläche des Gemisches 10 ist mittels Luftreifen 14 ein Saugtrichter 15 gehalten. Dem Saugtrichter 15 ist eine Niveaustandsanzeige 16 zugeordnet. An den Saugtrichter 15 schließt eine den Behälter 1 durchsetzende Leitung 17 an, welche über ein Feinfilter 18 und eine Pumpe 19 zu einer Vorwärmanlage 20 führt. Mittels der Pumpe 19 wird das an der Oberfläche des Gemisches 10 befindliche Öl über den Trichter 15 abgesaugt und durch die Leitung 17 dem Feinfilter 18 zugeführt, in welchem es filtriert wird. Weiters wird es der Vorwärmanlage 20 zugeleitet, wo es auf eine Temperatur von etwa 70° C bis 90° C erwärmt wird.

Von der Vorwämanlage 20 wird das erwärmte Altöl über eine Leitung 21 einem Behälter 4 mit einem Koaleszenzabscheider 41 zugeführt. Im Koaleszenzabscheider 41 erfolgt die Trennung in eine Ölphase, welche aufsteigt, und in eine wässerige Schlammphase, die nach unten absinkt. Die Ölphase durchsetzt in der Folge ein aus mehreren Schichten 51, 52, 53 bestehendes Kompaktfilter, in welchem die Reinigung bis zur Heizölqualität erfolgt. Die Schlammphase, welche etwa 75 % der ursprünglich im Altöl befindlichen Schadstoffe enthält, wird über eine Leitung 43, in welcher sich ein weiteres Ventil 44 befindet, an die Leitung 13 abgegeben.

Die erste Schichte 51 des Kompaktfilters besteht aus einem alkalisch aktivierten Tongranulat, die zweite Schichte 52 besteht aus einem sauer aktivierten Tongranulat und die dritte Schichte 53 besteht aus Aktivkohle. Durch die Behandlung mit dem alkalisch aktivierten Granulat werden die in der aus dem Koaleszenzabscheider 41 kommenden Ölphase noch enthaltenen sauren Bestandteile entfernt, wenngleich die Hauptmasse an Säureharzen und sauren wässerigen Anteilen in die Schlammphase abgeht. Die alkalische Aktivierung des Tonmaterials erfolgt durch Erhitzen mit Natronlauge oder Soda. Neben den sauren Bestandteilen werden in dieser Filterschicht 51 auch Teile der Schwermetallverbindungen gebunden, welche im Altöl gelöst enthalten sind.

Der größere Teil der Schwermetallverbindungen wird in der darauffolgenden zweiten Filterschiccht 52 gebunden, deren Material aus sauer aktiviertem Tongranulat besteht. Insbesondere wird hierdurch Cadmium zurückgehalten, das sonst als äußerst schädlicher Bestandteil in die Rauchgase gelangen würde.

Die für diese beiden Filterschichten verwendeten Aktivgranulate bestehen aus Tonmineralien mit ausgeprägter Kristallgitterstruktur und feinporiger, großer innerer Oberfläche, wodurch zusätzlich zur Chemisorption durch alkalische und saure Komponenten auch eine Adsorption von Schadstoffen und Verunreinigungen erfolgt.

Die dritte Filterschicht 53 stellt eine neutrale Adsorptionsmasse aus Aktivkohle dar, in der Chlor- und Schwefelverbindungen gebunden werden. Als besonders günstig hat sich hierbei eine Steinkohlen-Aktivkohle erwiesen, welche insbesondere jene Verbindungen adsorbiert, die aufgrund des pH-Wertes des Altöles und der Molekülgröße in den vorhergehenden Filterschichten nicht zurückgehalten werden.

Im oberen Bereich des Behälter 4 befindet sich ein windkesselartiger Kopfteil 46, durch welchen das im Behälter 4 gereinigte Altöl aus diesem mit gleichbleibendem Druck über eine Leitung 47 abgezogen wird. In der Leitung 47 befindet sich ein Spaltfilter 48, welches dazu dient, mit dem Öl mitgerissene Aktivkohle abzuscheiden. Das auf diese Weise gereinigte Altöl wird über ein Ventil 49 einem Ölbrenner 81 zugeleitet und in einem Heizkessel 82 verfeuert.

Die aus dem Behälter 1 über eine Leitung 13 abgeführten wässerigen Anteile und die aus dem Koaleszenzabscheider 41 über die Leitung 43 abgetrennte Schlammphase werden über die Leitung 13 und ein Ventil 60 einer Trennanlage 6 zugeleitet, in welcher diese Bestandteile aufbereitet werden. Die Trennanlage 6 besteht aus einem Wasser enthaltenden Behälter 61, welcher mit einem Einfülltrichter 62 ausgebildet ist. Über den Einfülltrichter 62 wird in den Behälter 61 ein hydrophobes, gasbeladenes Aktivgranulat 63 eingebracht, welche die öligen und die Säureharzanteile bindet und hierauf auf den Boden des Behälter 61 absinkt. Von dort wird das gesättigte Granulat 64 durch einen Ablauf 65 in einen Abfallbehälter 66 ausgebracht.

Das dem Behälter 61 zugeführte Wasser wird durch einen Kühler 67 hindurchgeleitet, in welchem es zur Kühlung des die Leitung 13 durchsetzenden Öles dient, worauf es in den Behälter 61 gelangt.

Der im Behälter 61 auftretende Wasserstand wird durch einen Niveauregler 68 gesteuert. Das im Behälter 61 befindliche, von den Schadstoffen gereinigte Wasser wird über einen Überlauf 69, ein Sichtglas 70 und eine Leitung 71 abgeführt. Dieses Wasser ist so sauber, daß es dem Kanal zugeleitet werden kann.

In dem vom Heizkessel 82 abführenden Rauchgaskanal 83 ist eine Schadstoffemissions-Meßeinrichtung angeordnet, durch welche allfällige Schadstoffemissionen festgestellt werden. Sobald dies der Fall ist bzw.

sobald die für die Emissionen vorgegebenen Grenzwerte überschritten werden, wird die Vorrichtung abgeschaltet und werden die erforderlichen Maßnahmen getroffen.

| Analyse der staubförmigen Rauchgasemissionen verschiedener Öle | | | | |
|---|---|---|---|---|
| | gesetzliche Vorschrift | Heizöl EL | ungereinigtes Altöl | erfindungsgemäß gereinigtes Öl |
| staubförmige Emissionen | | | | |
| Menge mg/Nm$^3$ davon Summe der Schwermetalle PB, Zn, Cr + | 30 | 17,7 | 93.3 | 25 |
| -Verbindungen mg/Nm$^3$ | 4 | 6,60 | 8,27 | 3,8 |
| Cadmium + lösl. Verbindungen mg/Nm$^3$ | 0,1 | 0,0 | 0,0 | 0,0 |
| HCl als Cl$_2$ mg/Nm$^3$ | 30 | 2,75 | 7,25 | 3,5 |
| SO$_2$ mg/Nm$^3$ | altes Gesetz 500 | 162 | 325 | 250 |

Das nach dem erfindungsgemäßen Verfahren gereinigte Altöl entspricht den gesetzlichen Anforderungen für Heizöle. Somit ist das Problem dadurch gelöst, daß das Altöl verbrannt wird, wodurch zudem die in diesem enthaltene Heizenergie genützt wird.

Die folgende Tabelle zeigt eine Analyse der in ungereinigtem Altöl und in erfindungsgemäß gereinigtem Altöl enthaltenen Fremdstoffe.

| Element | ungereinigtes Altöl | gereinigtes Altöl | Abscheidung |
|---|---|---|---|
| ALUMINIUM | kleiner 0,1 | kleiner 0,1 | |
| SILIZIUM | kleiner 0,1 | kleiner 0,1 | |
| PHOSPHOR* | 0,11 | 0,01 | 91 % |
| SCHWEFEL* | 0,74 | 0,12 | 84 % |
| KALZIUM* | 0,14 | kleiner 0,01 | 93 % |
| CHROM | kleiner 0,001 | kleiner 0,001 | |
| EISEN | 0,14 | kleiner 0,001 | 99 % |
| KUPFER | 0,001 | kleiner 0,001 | |
| ZINK* | 0,12 | kleiner 0,01 | 92 % |
| MOLYBDÄN | 0,002 | kleiner 0,002 | |
| ZINN | 0,001 | 0,001 | |
| BARIUM* | 0,01 | kleiner 0,01 | |
| BLEI | größer 0,01 | kleiner 0,01 | 90 % |

*-- stammt aus Additiven, Schwefel teilweise aus dem Öl selbst, Restelemente überwiegend aus Motorabrieb.

Der gesetzlich erlaubte Grenzwert für Polychlorbiphenyl in Motoraltölen beträgt 30 ppm. Tatsächlich enthalten ungereinigte Motoraltöle in der Regel zwischen 1,5 bis 3,5 ppm PCB.

## Ansprüche

1. Verfahren zur Aufbereitung von Fahrzeug-Altölen, insbesondere von verunreinigten Motorölen, Getriebeölen und Lagerölen, zu Heizöl durch physikalisch-chemische Behandlung, dadurch gekennzeichnet, daß das Altöl vorzugsweise nach Abscheidung der festen Grobanteile und einer sich durch Schwerkraft absetzenden wässerigen Phase durch einen Koaleszenz-Abscheider (41) geleitet wird, in welchem eine Trennung in eine aufsteigende Ölphase und eine absinkende wässerig-ölige Schlammphase erfolgt, worauf die Ölphase durch aufeinanderfolgende Chemisorptions- und Adsorptionsfiltration bis zur Heizölqualität gereinigt und die Schlammphase, vorzugsweise gemeinsam mit der anfangs abgeschiedenen wässerigen Phase, mit einem hydrophoben, mineralischen Aktivgranulat in Kontakt gebracht wird, an dem sich die Ölreste und Säureharzanteile binden, die als Feststoff ausgetragen werden.

2. Verfahren nach Anspruch 1, dadurch gekennzeichnet, daß die Chemisorptionsfiltration zuerst über alkalisch aktiviertes und anschließend über sauer aktiviertes Tongranulat (51, 52) erfolgt.

3. Verfahren nach Anspruch 2, dadurch gekennzeichnet, daß die Adsorptionsfiltration über Aktivkohle (53) erfolgt.

4. Verfahren nach einem der Ansprüche 1 bis 3, dadurch gekennzeichnet, daß die mit der wässerigen Phase vereinigte Schlammphase in eine auf einer Wasseroberfläche schwimmende Schicht aus einem mit Gasblasen beladenen hydrophoben Aktivgranulat (63) eindringt, worauf das mit den Öl- und Säureharzanteilen beladene Granulat unter die Wasseroberfläche absinkt und nach unten ausgetragen wird.

5. Vorrichtung zur Durchführung des Verfahrens nach einem der Patentansprüche 1 bis 4, gekennzeichnet durch die Kombination folgender Bauteile:
- einem Behälter (4) mit einem Koaleszenzabscheider (41) und darüber angeordneten, übereinander liegenden Filterschichten (51,52,53) aus alkalisch aktiviertem Tongranulat, sauer aktiviertem Tongranulat und Aktivkohle, einer Ölabzugsleitung (47) und einem Schlammabzugsventil (44),
- ein Heizklessel (82) mit Brenner (81) und Rauchgasableitung (83) sowie
- eine Trennanlage (6), bestehend aus einem Wasserbehälter mit einem an der Bodenseite angeordneten Ablauf (65), einem Einfülltrichter (62) für das gasbeladene Aktivgranulat (63), einer Zuleitung (13) für das zu reinigende wässerig-schlammige Material und einem Wasserüberlauf (69) zur Ableitung des Wassers.

6. Vorrichtung nach Anspruch 5, dadurch gekennzeichnet, daß sie zwischen einem Grobabscheider (1) und dem Behälter (4) mit dem Koaleszenzabscheider (41) ein Feinfilter (18) und eine Heizeinrichtung (20) für das vorgereinigte Altöl enthält.

7. Vorrichtung nach einem der Ansprüche 5 und 6, dadurch gekennzeichnet, daß sie eine Kühleinrichtung (67) für das aus dem Behälter (4) stammende wässerig-schlammige Material enthält.

8. Vorrichtung nach einem der Ansprüche 5 bis 7, dadurch gekennzeichnet, daß in der Rauchgasableitung (83) eine Emissionsmeßstelle für Chlor und Schwefeldioxid vorgesehen ist, welche zur Steuerung bzw. zum Abschalten des Heizkessels (82) bei Überschreiten der zulässigen Emissionswerte dient.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A- 755 856 (THE CABORANDUM CO.) <br> * Patentansprüche 1,7 * <br> --- | 1,5 | C 10 M 175/00 |
| A | US-A-1 831 094 (W.I. CLAYES) <br> * Patentanspruch 1 * <br> --- | 1,2 | |
| A | GB-A- 476 421 (J.K. RUSELL) <br> * Patentansprüche 1-14 * <br> --- | 1 | |
| A | GB-A-2 084 480 (BP) <br> * Patentansprüche 1,3; Fig. * <br> --- | 1,4 | |
| A | PATENT ABSTRACTS OF JAPAN, Band 9, Nr. 135 (M-383)[1858], 11. Juni 1985; & JP-A-66 17 624 (TOYOTA JIDOSHA K.K.) <br> * Zusammenfassung * <br> --- | 5,8 | |
| A | US-A-3 561 193 (L.B. BARANOWSKI) <br> * Patentanspruch 1 * <br> --- | 6 | |
| A | DE-U-8 628 284 (LEYBOLD-HERAEUS) <br> * Patentansprüche 1-3 * <br> ------ | 1-3 | **RECHERCHIERTE SACHGEBIETE (Int. Cl.5)** <br><br> C 10 M <br> B 01 D <br> F 23 N |

Der vorliegende Recherchenbericht wurde für alle Patentansprüche erstellt

| Recherchenort | Abschlußdatum der Recherche | Prüfer |
|---|---|---|
| DEN HAAG | 18-05-1990 | ROTSAERT L.D.C. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................
& : Mitglied der gleichen Patentfamilie, übereinstimmendes Dokument